# EUROPÄISCHE PATENTSCHRIFT

(11) **EP 2 641 692 B1**
(45) Veröffentlichungstag und Bekanntmachung des Hinweises auf die Patenterteilung: **19.11.2014**
(21) Anmeldenummer: 13160263.3
(22) Anmeldetag: 20.03.2013
(51) Int. Cl.: B23Q 5/56, F16H 57/12

(54) **Werkzeugmaschine mit wenigstens einer rotierenden Maschinenachse**
Machine tool with at least one rotating machine axis
Machine-outil dotée d'au moins un axe de machine rotatif

(30) Priorität: 20.03.2012 AT 500902012
(43) Veröffentlichungstag der Anmeldung: 25.09.2013
(73) Patentinhaber: WFL Millturn Technologies GmbH & Co. KG, 4030 Linz (AT)
(72) Erfinder: Maringer, Herbert, 4642 Sattledt (AT)
(74) Vertreter: Jell, Friedrich

(56) Entgegenhaltungen:
- EP-A1- 0 810 062
- AT-B1- 505 628
- JP-A- S63 145 858

## Beschreibung

Die Erfindung betrifft eine Werkzeugmaschine mit wenigstens einer rotierenden Maschinenachse und mit mindestens einem zum Antreiben der Maschinenachse vorgesehenen Vorschubantrieb, der einen Antrieb und eine umkehrspielfreie Getriebebaugruppe, das eine mit dem Antrieb verbundene Getriebeantriebswelle und wenigstens zwei von der Getriebeantriebswelle angetriebene, spielfreie, parallel geschaltete und zueinander koaxiale Getriebeeinheiten, insbesondere Zykloidengetriebe und/oder Gleitkeilgetriebe, gleicher Übersetzungen aufweist.

Aus dem Stand der Technik ist bekannt (AT505628B1), ein umkehrspielfreies Getriebe bzw. eine umkehrspielfreie Getriebegruppe mit zwei Gleitkeilgetrieben (meist auch als "Harmonic-Drive-Getriebe" bezeichnet) koaxial an einen Antrieb anzuschließen. Motorwelle des Antriebs und Getriebeantriebswelle sind miteinander starr verbunden. Ein derartiger Vorschubantrieb kann zwar Spielfreiheit und hohe Steifigkeit, im Wesentlichen geprägt durch seine Getriebebaugruppe, ermöglichen, ist jedoch gegenüber Schwingungen am Antriebsstrang empfindlich. Montagebefestigungen mit Dämpfungselementen können zur Reduktion dieser Schwingungen eingesetzt werden, führen jedoch nachteilig zu einer verminderten Abstützung des Antriebs bzw. seines Antriebsdrehmoments und einer damit einhergehenden verminderten Steifigkeit am Abtrieb. Zusätzlich kann eine mögliche Verkippung der Antriebsachse gegenüber der Getriebeachse zu ungünstigen Eingriffsverhältnissen in den Getrieben führen (z. B.: Kantentragen) was die beschädigungsfrei übertragbaren Drehmomente in der Getriebeeinheit wesentlich reduziert und damit die Standfestigkeit des Vorschubantriebs verringern kann.

Zudem ist aus der EP0810062A1 bekannt, zwei nebeneinander vorgesehene Cyclogetriebe über einen Zahnriemen zu verspannen, um damit Spielfreiheit zu schaffen. Ein Zahnriemen als Spannelement kann eine vergleichsweise hohe Steifigkeit im Antriebsstrang eines Vorschubantriebs nicht gewährleisten.

Die Erfindung hat sich daher die Aufgabe gestellt, einen Vorschubantrieb für eine Werkzeugmaschine der eingangs geschilderten Art derart auszubilden, dass diese gegenüber Schwingungen unempfindlich ist und trotzdem vergleichsweise hohe Steifigkeit, insbesondere Torsionssteifigkeit und Spielfreiheit, gewährleisten kann. Außerdem soll der Vorschubantrieb eine hohe Standfestigkeit aufweisen.

Die Erfindung löst die gestellte Aufgabe dadurch, dass der Vorschubantrieb ein zwischen Getriebeantriebswelle und Antrieb geschaltetes Zahnriemengetriebe aufweist.

Weist der Vorschubantrieb ein zwischen Getriebeantriebswelle und Antrieb geschaltetes Zahnriemengetriebe auf, kann sowohl die geforderte Spielfreiheit des Antriebstrangs sichergestellt, als auch der Antriebsstrang unempfindlich gegenüber Schwingungen bzw. schwingungsfrei sein und wenigstens hinsichtlich seiner Elastizität in Rotationsrichtung eine vergleichsweise hohe Steifigkeit aufweisen, was zu maschinendynamisch vorteilhaften Eigenschaften führen kann. Die Elastizität des Zahnriemens im Zahnriemengetriebe kann nämlich für einen Ausgleich eines eventuellen schwingungsbedingten Verkippens der Achsen des Antriebsstrangs genutzt werden, wohingegen die vergleichsweise hohe Steifigkeit des Zahnriemens in seinem Last- und Leertrum eine radiale Steifigkeit des Vorschubantriebs sicherstellen kann. Trotz des Zahnriemengetriebes kann der erfindungsgemäße Vorschubantrieb eine hohe Positioniergenauigkeit samt besonders genauer Widerholgenauigkeit seiner Drehwinkeleinstellung der anzutreibenden Maschinenachse ermöglichen. Dies kann insbesondere von Vorteil sein, wenn die Messeinrichtung zur Erfassung der Winkellage und/oder Winkelgeschwindigkeit der Maschinenachse im Bereich des Antriebsmotors, also hinter dem Getriebe, liegt. Außerdem kann mit dem Vorsehen eines Zahnriemengetriebes die Eigenfrequenz des Vorschubantriebs in einen für Werkzeugmaschinen unkritischen Bereich verschoben werden. Ein Zahnriemengetriebe weist nämlich eine vergleichsweise niedrige Eigenfrequenz auf. Außerdem kann durch das Zahnriemengetriebe eine Schwingungsentkopplung von Antriebswelle und Getriebeantriebswelle ermöglicht werden, sodass sich auch eventuelle Antriebsschwingungen nicht auf die Bewegung der Maschinenachse einkoppeln können. Ein besonders weiches Eintreiben eines Antriebsmoments in den Antriebsstrang kann sich somit ergeben, wodurch auch Spannungsspitzen in der Abtriebswelle des Motors vermeidbar sind, die beispielsweise bei direkter Anflanschung des Motors an die Getriebebaugruppe zu befürchten wären. Trotz kompakter Bauweise kann damit ein Dauerbruch der Motorwelle bzw. Antriebswelle einfach vermieden werden, was der Standfestigkeit des Vorschubantriebs nützlich sein kann. Der erfindungsgemäße Vorschubantrieb kann sich daher insbesondere zum Antreiben eines Werkzeughalters oder einer Werkzeugaufnahme der Werkzeugmaschine eignen. Ein Zusammenspiel der Getriebebaugruppe, aufweisend zwei "Harmonic-Drive-Getriebe", mit dem vergleichsweise kostengünstigen Zahnriemengetriebe kann also gegenüber dem Stand der Technik nicht nur Spielfreiheit, hohe Schwingungsstabilität und rotatorische Steifigkeit, sondern auch hohe Standfestigkeit gegenüber mechanischen Belastungen an Maschinenachsen einer Werkzeugmaschine aufweisen.

Um hohe Schwingungsamplituden der Achsen des Antriebsstrangs ausgleichen zu können, verläuft die Antriebsachse des Antriebs parallel zur Getriebeachse der Getriebebaugruppe, wobei die Antriebswelle des Antriebs und die Getriebeantriebswelle an je eine Riemenscheibe des Zahnriemengetriebes anschließen. Kippbewegungen der Antriebs- sowie der Getriebeachse münden nämlich über ihre Riemenscheiben unmittelbar in das Zahnriemengetriebe ein und können dort vom Zahnriemen aufgenommen und gedämpft werden.

Sind Antrieb und Getriebebaugruppe nebeneinander angeordnet, können sich kompakte Bauverhältnisse am Vorschubantrieb ergeben. Dies kann zur Gewichtsreduzierung des Vorschubantriebs genutzt werden, um eine bewegte Masse, beispielsweise durch Schlitten, gering zu halten. Außerdem können damit diese rotatorischen Achsen nahe zur Maschinenachse bzw. zur Werkzeugaufnahme vorgesehen werden, was eine kompakte Bauweise begünstigt und damit auch die Bewegungsmöglichkeiten des Werkzeugs maximieren kann.

Die Steifigkeit an der rotierenden Maschinenachse kann erhöht werden, wenn die Maschinenachse parallel zur Getriebeachse der Getriebebaugruppe verläuft.

Die Abstützung des Antriebs kann erheblich verbessert werden, wenn die Getriebebaugruppe ein Getriebegehäuse aufweist, in dem die Getriebeeinheiten um die Getriebeachse angeordnet sind. Außerdem kann dadurch das Getriebegehäuse das Motordrehmoment steif aufnehmen, wodurch die Torsionssteifigkeit des Antriebsstrangs erheblich verbessert werden kann.

Eine vergleichsweise hohe Torsionssteifigkeit beim Antriebsstrang des Vorschubantriebs kann ermöglicht werden, wenn sich das Antriebsgehäuse des Antriebs über das Schlittengehäuse drehfest am Getriebegehäuse der Getriebebaugruppe abstützt.

Die Bauverhältnisse des Vorschubantriebs können weiter reduziert werden, wenn der Getriebeantrieb und der Getriebeabtrieb koaxial um die Getriebeachse angeordnet sind.

In den Figuren ist beispielsweise der Erfindungsgegenstand anhand eines Ausführungsbeispiels näher dargestellt. Es zeigen
- Fig. 1: eine teilweise dargestellte Werkzeugmaschine mit dem erfindungsgemäßen Vorschubantrieb im Querschnitt und
- Fig. 2: die Werkzeugmaschine nach Fig. 1 in einer Stirnansicht.

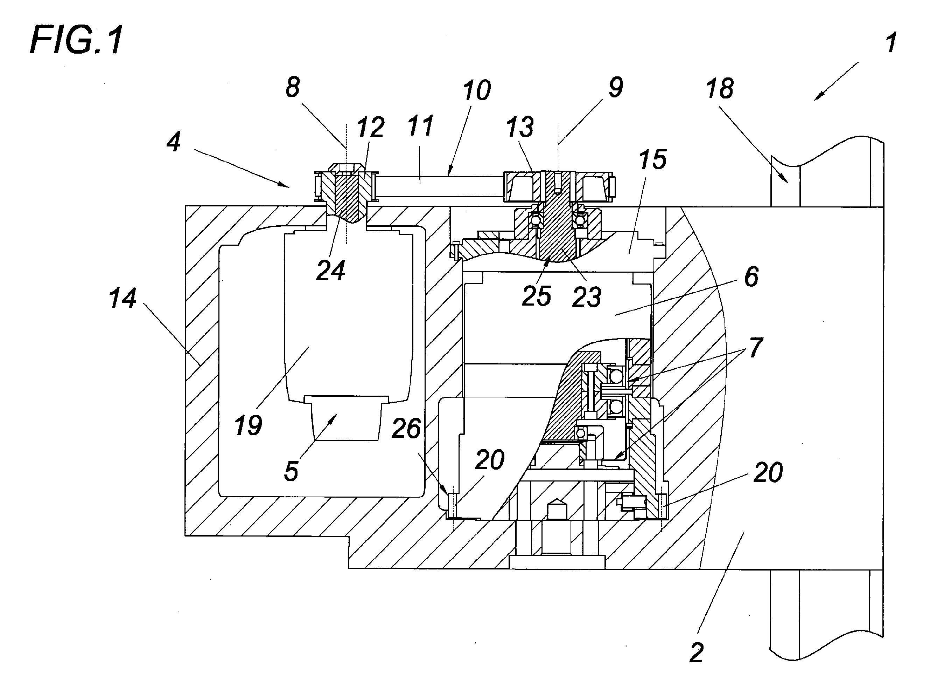

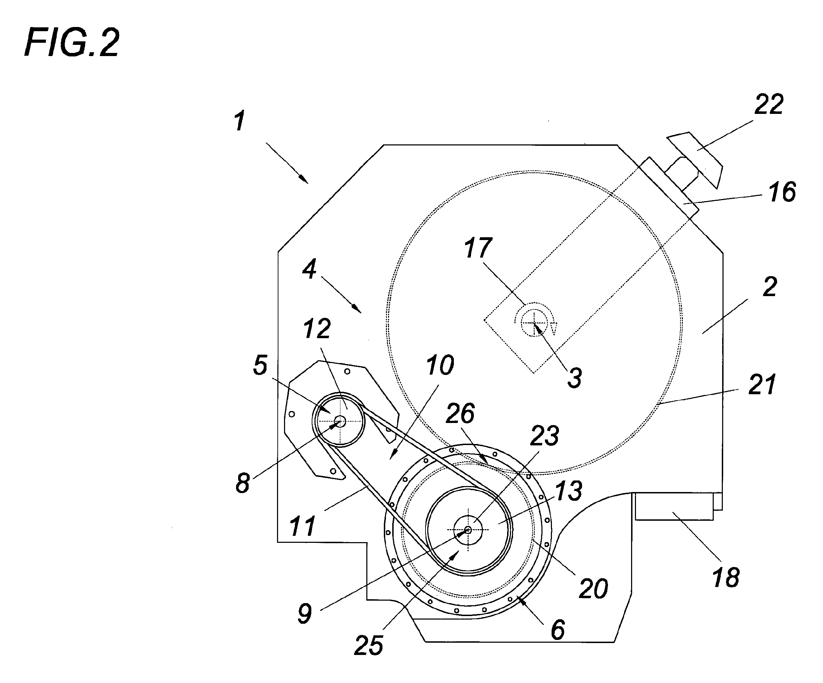

Von der nach den Figuren 1 und 2 dargestellten Werkzeugmaschine 1 ist lediglich ein an einer Schlittenführung 18 geführter Schlitten 2 mit einer, eine Rotation 17 ausführenden Maschinenachse 3 dargestellt. Zum Antreiben dieser Maschinenachse 3 ist ein Vorschubantrieb 4 vorgesehen, der einen elektrischen Antrieb 5 und eine umkehrfreie Getriebebaugruppe 6 enthält. Für hohe Steifigkeitswerte ist diese Getriebebaugruppe mit zwei spielfreien, parallel geschalteten und zueinander koaxialen Getriebeeinheiten 7 versehen, die als Gleitkeilgetriebe ("Harmonic-Drive-Getriebe") ausgeführt sind und zu deren Parallelschaltung eine gleiche Übersetzung aufweisen.

Um die Antriebsachse 8 und die Getriebeachse 9 unabhängig von der radialen Elastizität des Antriebsstrangs einstellen zu können, ist dem Vorschubantrieb 4 ein Zahnriemengetriebe 10 zugeordnet, das zwischen der Getriebebaugruppe 6 bzw. deren Getriebeantriebswelle 23 und dem Antrieb 5 geschaltet ist. Abweichende Parallelitäten zwischen Getriebeachse 9 und die Antriebsachse 8, insbesondere auch durch Schwingungen des Antriebsstrangs bedingt, können vom Zahnriemen 11 abgetragen werden, wodurch ein besonders standfester und positionsgenau einstellbarer Vorschubantrieb 4 geschaffen werden kann.

Die Antriebsachse 8 des Antriebs 5 ist parallel zur Getriebeachse 9 der Getriebebaugruppe 6 - zudem tragen Antriebswelle 24 und Getriebeantriebswelle 23 je eine Riemenscheibe 12, 13 des Zahnriemengetriebes 10, wodurch konstruktive Einfachheit entsteht.

Platzsparend sind Antrieb 5 und Getriebebaugruppe 6 nebeneinander angeordnet, wodurch sich auch eine kompakte Bauweise am Schlitten 2 ergeben.

Der Antrieb 5 stützt sich mit seinem Antriebsgehäuse 19 über das Schlittengehäuse 14 drehfest am Getriebegehäuse 15 der Getriebebaugruppe 6 ab, was zu hoher Torsionssteifigkeit des gesamten Antriebsstrangs beitragen kann. Die Getriebeeinheiten 7 sind in dem Getriebegehäuse 15 um die Getriebeachse 9 drehfest angeordnet.

Getriebeantrieb 25 und Getriebeabtrieb 26 sind koaxial um die Getriebeachse 9 angeordnet sind. Die Getriebeabtrieb 26 treibt eine Werkzeugaufnahme 16 bzw. einen Werkzeughalter an, um damit ein Werkzeug 22 um die Maschinenachse 3 zu rotieren. Zu diesem Zweck ist am Getriebeabtrieb 26 der Getriebebaugruppe 6 ein Stirnrad 20 vorgesehen, das in spielfreiem Eingriff mit einem Zahnrad 21 der Werkzeugaufnahme 16 steht, wie der Fig. 2 insbesondere zu entnehmen.

Dadurch verläuft auch die Maschinenachse 3 parallel zur Getriebeachse 9 der Getriebebaugruppe 6, um hohe Steifigkeit und eine verringerte Schwingung sicherzustellen. Außerdem liegen damit die rotatorischen Achsen 8, 9 nahe zur Werkzeugaufnahme 16, wodurch diese kompakte Bauweise eine besonders günstige - weil möglichst kleine - Störkontur ermöglicht. Die Bewegungsmöglichkeiten eines Werkzeugs werden so maximiert.

## Patentansprüche

1. Werkzeugmaschine mit wenigstens einer rotierenden Maschinenachse (3) und mit mindestens einem zum Antreiben der Maschinenachse (3) vorgesehenen Vorschubantrieb (4), der einen Antrieb (5) und eine umkehrspielfreie Getriebebaugruppe (6), das eine mit dem Antrieb (5) verbundene Getriebeantriebswelle (23) und wenigstens zwei von der Getriebeantriebswelle (23) angetriebene, spielfreie, parallel geschaltete und zueinander koaxiale Getriebeeinheiten (7), insbesondere Zykloidengetriebe und/oder Gleitkeilgetriebe, gleicher Übersetzungen aufweist, **dadurch gekennzeichnet, dass** der Vorschubantrieb (4) zur Verschiebung seiner Eigenfrequenz in einen für die Werkzeugmaschine unkritischen Bereich ein zwischen Getriebeantriebswelle (23) und Antrieb (5) geschaltetes Zahnriemengetriebe (10) aufweist.

2. Werkzeugmaschine nach Anspruch 1, **dadurch gekennzeichnet, dass** die Antriebsachse (8) des Antriebs (5) parallel zur Getriebeachse (9) der Getriebebaugruppe (6) verläuft, wobei die Antriebswelle (24) des Antriebs (5) und die Getriebeantriebswelle (23) an je eine Riemenscheibe (12, 13) des Zahnriemengetriebes (10) anschließen.

3. Werkzeugmaschine nach Anspruch 1 oder 2, **dadurch gekennzeichnet, dass** Antrieb (5) und Getriebebaugruppe (6) nebeneinander angeordnet sind.

4. Werkzeugmaschine nach Anspruch 1, 2 oder 3, **dadurch gekennzeichnet**, das die Maschinenachse (3) parallel zur Getriebeachse (9) der Getriebebaugruppe (6) verläuft.

5. Werkzeugmaschine nach einem der Ansprüche 1 bis 4, **dadurch gekennzeichnet, dass** die Getriebebaugruppe (6) ein Getriebegehäuse (15) aufweist, in dem die Getriebeeinheiten (7) um die Getriebeachse (9) angeordnet sind.

6. Werkzeugmaschine nach Anspruch 5, **dadurch gekennzeichnet, dass** sich das Antriebsgehäuse (19) des Antriebs (5) über das Schlittengehäuse (14) drehfest am Getriebegehäuse (15) der Getriebebaugruppe (6) abstützt.

7. Werkzeugmaschine nach einem der Ansprüche 1 bis 6, **dadurch gekennzeichnet, dass** der Getriebeantrieb (25) und der Getriebeabtrieb (26) koaxial um die Getriebeachse (9) angeordnet sind.

## Claims

1. A machine tool, comprising at least one rotating machine shaft (3) and at least one feed drive (4) which is provided for driving the machine shaft (3) and comprises a drive (5) and backlash-free transmission assembly (6), which assembly comprises a transmission drive shaft (23) connected to the drive (5) and at least two transmission units (7), especially cycloid gears and/or sliding wedge gears, of the same transmission ratios, said transmission units being driven by the transmission drive shaft (23), being free from play, and being switched in parallel and disposed coaxially with respect to each other, **characterized in that** the feed drive (4) comprises a toothed belt gear (10) switched between the transmission drive shaft (23) and the drive (5) for shifting the natural frequency of said feed drive to a range which is non-critical for the tool machine.

2. A machine tool according to claim 1, **characterized in that** the drive axis (8) of the drive (5) extends parallel to the transmission axis (9) of the transmission assembly (6), wherein the drive shaft (24) of the drive (5) and the transmission drive shaft (23) are each adjacent to a belt pulley (12, 13) of the toothed belt gear (10).

3. A machine tool according to claim 1 or 2, **characterized in that** the drive (5) and the transmission assembly (6) are arranged adjacent to each other.

4. A machine tool according to claim 1, 2 or 3, **characterized in that** the machine axis (3) extends parallel to the transmission axis (9) of the transmission assembly (6).

5. A machine tool according to one of the claims 1 to 4, **characterized in that** the transmission assembly (6) comprises a transmission housing (15) in which the transmission units (7) are arranged around the transmission axis (9).

6. A machine tool according to claim 5, **characterized in that** the drive housing (19) of the drive (5) rests in a torsion-proof manner via the carriage housing (14) on the transmission housing (15) of the transmission assembly (6).

7. A machine tool according to one of the claims 1 to 6, **characterized in that** the transmission drive (25) and the transmission output (9) are arranged coaxially around the transmission axis (9).

## Revendications

1. Machine-outil avec au moins un axe de machine (3) rotatif et avec au moins un entraînement d'avancement (4) conçu pour entraîner l'axe de machine (3), qui comprend un entraînement (5) et un groupe de transmission (6) sans jeu d'inversion, présentant un arbre d'entraînement de la transmission (23) relié à l'entraînement (5) et au moins deux unités de transmission (7) sans jeu, entraînées par l'arbre d'entraînement de la transmission (23) et montées en parallèle, coaxiales l'une de l'autre, en particulier des transmissions cycloïdales et/ou des transmissions à démultiplicateur harmonique, ayant le même rapport de transmission, **caractérisée en ce que** l'entraînement d'avancement (4) présente pour le décalage de sa fréquence propre une transmission à courroie dentée (10) montée entre l'arbre d'entraînement de la transmission (23) et l'entraînement (5) dans une zone non critique pour la machine-outil.

2. Machine-outil selon la revendication 1, **caractérisée en ce que** l'axe d'entraînement (8) de l'entraînement (5) est parallèle à l'axe de transmission (9) du groupe de transmission (6), l'arbre d'entraînement (24) de l'entraînement (5) et l'arbre d'entraînement de la transmission (23) se raccordant chacun à une poulie à courroie (12, 13) de la transmission à courroie dentée (10).

3. Machine-outil selon la revendication 1 ou 2, **caractérisée en ce que** l'entraînement (5) et le groupe de transmission (6) sont disposés l'un à côté de l'autre.

4. Machine-outil selon la revendication 1, 2 ou 3, **caractérisée en ce que** l'axe de machine (3) est parallèle à l'axe de transmission (9) du groupe de transmission (6).

5. Machine-outil selon l'une des revendications 1 à 4, **caractérisée en ce que** le groupe de transmission (6) présente un carter de transmission (15) dans lequel sont disposées les unités de transmission (7) et l'axe de transmission (9).

6. Machine-outil selon la revendication 5, **caractérisée en ce que** le carter d'entraînement (19) de l'entraînement (5) s'appuie de façon solidaire en rotation sur le carter de transmission (15) du groupe de transmission (6) par l'intermédiaire du carter de chariot (14).

7. Machine-outil selon l'une des revendications 1 à 6, **caractérisée en ce que** l'entraînement de transmission (25) et la sortie de transmission (26) sont disposés de façon coaxiale autour de l'axe de transmission (9).
